# EUROPEAN PATENT APPLICATION

(11) **EP 4 844 453 A1**
(43) Date of publication of application: **25.11.2026**
(21) Application number: 26178561.2
(22) Date of filing: 13.05.2026
(51) Int. Cl.: G01V 3/08, G08G 1/14

(54) **OBJECT DETECTION SYSTEM AND OBJECT DETECTION METHOD**

(30) Priority: 23.05.2025 JP 2025086803
(71) Applicant: MITSUMI ELECTRIC CO., LTD., Tama-shi, Tokyo 206-8567 (JP)
(72) Inventor: YAMADA, Motoharu, Kitasaku-gun, Nagano, 389-0293 (JP); GOTO, Tsuyoshi, Kitasaku-gun, Nagano, 389-0293 (JP); KOGA, Nozomi, Kitasaku-gun, Nagano, 389-0293 (JP); ZHANG, Siyu, Kitasaku-gun, Nagano, 389-0293 (JP); OGIHARA, Yuji, Kitasaku-gun, Nagano, 389-0293 (JP); OKIHARA, Chiaki, Kitasaku-gun, Nagano, 389-0293 (JP)
(74) Representative: Winter, Brandl - Partnerschaft mbB

(57) **Abstract**

An object detection system 1 includes a plurality of sensor units 10 that are provided corresponding to a predetermined area 400, detect an object 500 in the predetermined area 400, and output detection results, and an information processing apparatus 20 that determines whether the object 500 is present in the predetermined area 400, based on the detection results. The information processing apparatus 20 includes a communication unit 21 that communicates with an external device 50 and acquires the detection result of each of the plurality of sensor units 10, a determination unit 22 that determines whether the object 500 is present in the predetermined area, based on the detection results when the detection results of the plurality of sensor units 10 coincide with each other and determines that an abnormality has occurred in at least one of the sensor units 10 in the predetermined area when the detection results of the plurality of sensor units 10 do not coincide with each other, and a storage unit 24 that stores a determination result.

## Description

### Technical Field

The present invention relates to an object detection system and an object detection method.

### Background Art

In recent years, a known object detection system determines whether an object is present in a predetermined area, based on a detection result of a sensor. For example, Patent Document 1 discloses a technique in which one magnetic sensor is installed on the ground in an arrangement area, and it is determined whether a vehicle is parked in the arrangement area, based on a detection result of the one magnetic sensor.

### Citation List

### Patent Literature

Patent Document 1: JP 2019-203829 A

### Summary of Invention

### Technical Problem

An object detection system representatively described in Patent Document 1 determines a parked state and an empty state of an arrangement area by using a detection result of one magnetic sensor installed in the arrangement area. Therefore, according to a demonstration experiment by the inventors of the present application, it was found that erroneous detection occurred (with a detection rate of about 98%), depending on a location where the magnetic sensor was installed, a path of the vehicle when the vehicle entered the parking lot, and an orientation of the vehicle.

However, when an erroneous detection occurs in a conventional object detection system using one magnetic sensor, a manager or the like of the object detection system cannot recognize that the detection by the magnetic sensor is erroneous, unless a user of a parking lot or the like to which the object detection system is applied informs the manager or the like about the malfunction.

The present invention has been made to solve the problems described above, and an object of the present invention is to enable detection of the occurrence of erroneous detection of an object in an object detection system.

### Solution to Problem

An object detection system according to a representative embodiment of the present invention includes a plurality of sensor units provided corresponding to a predetermined area, and configured to detect an object in the predetermined area, and output a detection result, and an information processing apparatus configured to determine whether the object is present in the predetermined area, based on the detection result, in which the information processing apparatus includes a communication unit configured to communicate with an external device and acquire the detection result of each of the sensor units, a determination unit configured to determine, when the detection results of the plurality of sensor units coincide with each other, whether the object is present in the predetermined area, based on the detection results, and determine, when the detection results of the plurality of sensor units do not coincide with each other, that an abnormality has occurred in the sensor unit in the predetermined area, and a storage unit configured to store a determination result from the determination unit.

### Advantageous Effects of Invention

According to one aspect of the present invention, it is possible to detect the occurrence of an erroneous detection of an object in an object detection system.

### Brief Description of Drawings

FIG. 1 is a diagram illustrating a configuration of an object detection system according to an embodiment.
FIG. 2 is a diagram illustrating an example of a parking lot having an arrangement area in which a sensor unit is installed.
FIG. 3 is a diagram illustrating an arrangement example of the sensor units in the arrangement area.
FIG. 4 is a diagram illustrating an example of a hardware configuration of an information processing apparatus.
FIG. 5 is a diagram illustrating a functional block configuration of the information processing apparatus.
FIG. 6A is a diagram for describing a parking determination method and an abnormality detection method.
FIG. 6B is a diagram for describing the parking determination method and the abnormality detection method.
FIG. 6C is a diagram for describing the parking determination method and the abnormality detection method.
FIG. 6D is a diagram for describing the parking determination method and the abnormality detection method.
FIG. 7A is a diagram illustrating a display example when information relating to a state of each arrangement area and a state of each sensor unit in a parking lot to be monitored is displayed on a screen of an information processing terminal.
FIG. 7B is a diagram illustrating an illumination example of an illumination device.
FIG. 8 is a flowchart illustrating a process flow according to the parking determination method and the abnormality detection method by the information processing apparatus.

### Description of Embodiments

### 1. Overview of Embodiments

First, an outline of a representative embodiment of the invention disclosed in the present application will be described. In the following description, as an example, reference signs in the drawings corresponding to the components of the invention are illustrated in parentheses.
[1] An object detection system (1) according to a representative embodiment of the present invention includes a plurality of sensor units (10, 10_1 to 10_n) provided corresponding to a predetermined area (400, 400_1 to 400_m), and configured to detect an object (500) in the predetermined area and output detection results, and an information processing apparatus (20) configured to determine whether the object is present in the predetermined area, based on the detection results, in which the information processing apparatus includes a communication unit (21) configured to communicate with an external device (10, 50) and acquire the detection result of each of the plurality of sensor units, a determination unit (22) configured to determine, when the detection results of the plurality of sensor units coincide with each other, whether the object is present in the predetermined area, based on the detection results, and determine, when the detection results of the plurality of sensor units do not coincide with each other, that an abnormality has occurred in at least one of the sensor units in the predetermined area, and a storage unit (24) configured to store a determination result from the determination unit.
[2] The object detection system described in [1] above further includes an external device (50) connected to the information processing apparatus via a communication line, the information processing apparatus may further include a notification control unit (23) configured to generate abnormality detection information (203) indicating that an abnormality has occurred in the predetermined area and transmit the abnormality detection information to the external device via the communication unit, when the determination unit determines that an abnormality has occurred in at least one of the sensor units in the predetermined area, and the external device may notify, when receiving the abnormality detection information, that an abnormality has occurred in the predetermined area in a human-perceivable manner.
[3] In the object detection system described in [2] above, the external device may include an information processing terminal (51) including a display device (511), and the information processing terminal may cause the display device to display information indicating that an abnormality has occurred in the predetermined area, when receiving the abnormality detection information.
[4] In the object detection system described in [2] or [3] above, the external device may include an illumination device (52) including a light-emitting unit (521) and a drive control circuit (522) configured to control drive of the light-emitting unit, and the drive control circuit may cause the light-emitting unit to emit light, when receiving the abnormality detection information.
[5] In the object detection system described in [4] above, the illumination device may be provided corresponding to each predetermined area being the predetermined area.
[6] A method according to a representative embodiment of the present invention is an object detection method for determining whether an object is present in a predetermined area, based on detection results of a plurality of sensor units provided corresponding to the predetermined area and configured to detect the object in the predetermined area. The method includes a first step (S1, S2) of acquiring, by an information processing apparatus, the detection results of the plurality of sensor units, a second step (S3, S5) of determining, by the information processing apparatus, whether the detection results of the plurality of sensor units coincide with each other, a third step (S3, S5) of determining, by the information processing apparatus, whether the object is present in the predetermined area, based on the detection results, when the detection results of the plurality of sensor units coincide with each other and a fourth step (S7) of determining, by the information processing apparatus, that an abnormality has occurred in the sensor unit in the predetermined area, when the detection results of the plurality of sensor units do not coincide with each other.

### 2. Specific Examples of Embodiments

Specific examples of embodiments of the present invention will be described below with reference to the drawings. In the following description, components common to the respective embodiments are denoted by the same reference signs, and repeated descriptions thereof are omitted.

### Embodiments

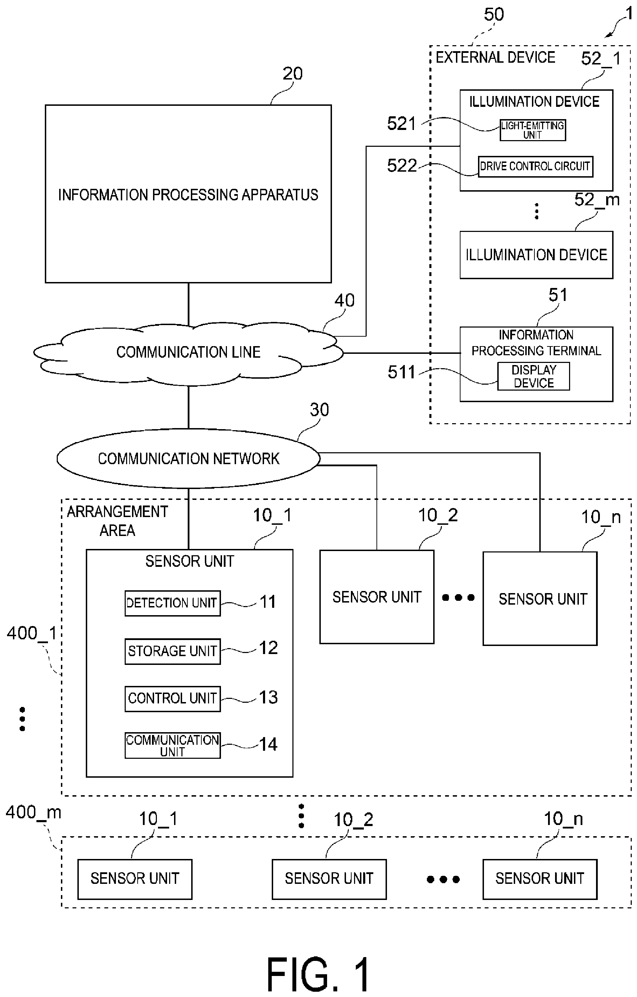

FIG. 1 is a diagram illustrating a configuration of an object detection system according to an embodiment.

An object detection system 1 is a system that detects whether an object is present in a predetermined area. In the present embodiment, as an example, the object detection system 1 is a parking detection system, the object to be detected is a vehicle, and the predetermined area is a region (hereinafter also referred to as "arrangement area") provided in a parking lot in which a vehicle can be parked.

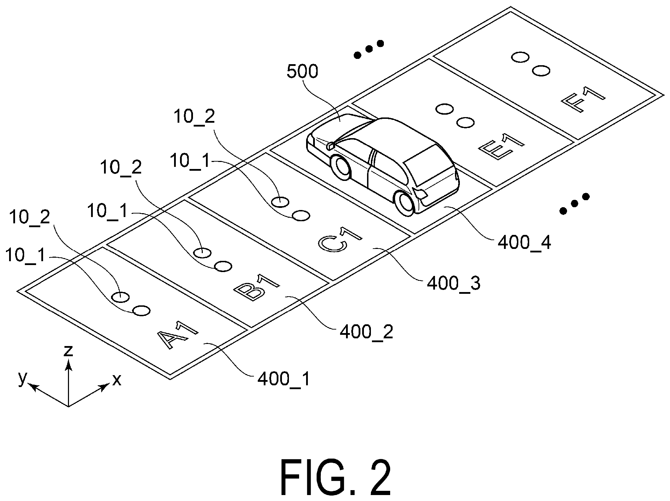

As illustrated in FIG. 1, the object detection system 1 includes a plurality of sensor units 10, an information processing apparatus 20, and an external device 50. FIG. 2 illustrates an installation example of the sensor units 10.

As illustrated in FIG. 2, the sensor units 10 are installed in a predetermined area, that is, in at least one arrangement area 400. For example, the sensor units 10 are provided for each of the arrangement areas 400_1 to 400_m (m being an integer of 2 or greater), detect an object in the corresponding arrangement areas 400_1 to 400_m, and output a detection result. Note that, in the following description, when the arrangement areas 400_1 to 400_m are not distinguished from each other, the arrangement areas 400_1 to 400_m are referred to as "arrangement areas 400".

In the object detection system 1, a plurality of sensor units are installed in one arrangement area 400. That is, as illustrated in FIG. 1, a sensor set including n (n being an integer of 2 or greater) sensor units 10 is installed in each of the m arrangement areas 400.

In the present embodiment, a case in which two (n = 2) sensor units 10_1 and 10_2 are arranged in one arrangement area 400 will be described as an example. However, the number n of sensor units installed in one arrangement area 400 is not particularly limited. Note that, in the following description, when the sensor units 10_1 and 10_2 are not distinguished from each other, the sensor units 10_1 and 10_2 may be referred to as "sensor units 10".

As illustrated in FIG. 2, the sensor units 10 are provided in the corresponding arrangement areas 400, for example. More specifically, the sensor units 10 may be provided on the ground in the corresponding arrangement areas 400. In this case, the sensor units 10 are present on the ground below the vehicle and within a predetermined distance from the vehicle.

For example, the sensor units 10 detect an object in a predetermined area (the arrangement areas 400) by at least one method among a known magnetic method and a Doppler method. The sensor units 10 are connected to the information processing apparatus 20 via a communication network 30 (including a gateway, not illustrated) and a communication line 40 (for example, an Internet line), transmit a detection result of an object in a predetermined area to the information processing apparatus 20, and receive control information and the like from the information processing apparatus 20.

Specifically, the sensor unit 10 includes a detection unit 11, a storage unit 12, a control unit 13, and a communication unit 14.

The detection unit 11 serves as a sensor that detects an object. For example, the detection unit 11 includes at least one of a known magnetic sensor and a known Doppler sensor. In the present embodiment, the detection unit 11 that is described as an example includes both a magnetic sensor and a Doppler sensor.

The magnetic sensor includes, for example, an x-direction magnetic field detection element having sensitivity for detecting a magnetic field in an x-direction (a long side direction of the vehicle), a y-direction magnetic field detection element having sensitivity for detecting a magnetic field in a y-direction (a width direction of the vehicle), and a z-direction magnetic field detection element having sensitivity for detecting a magnetic field in a z-direction (a direction perpendicular to the ground). The magnetic field detection elements of the three directions x, y, and z measure the intensity of an external magnetic field (geomagnetism), which is different between a state of no vehicle being present and a state of a vehicle being present.

The Doppler sensor transmits a radio wave (such as a microwave) having a constant frequency in a predetermined direction, receives a reflected wave of the radio wave, and measures whether a moving object is present, a traveling direction of the object, and a speed of the object, based on a change in the frequency of the reflected wave with respect to the frequency of the transmitted radio wave.

Note that the sensor included in the detection unit 11 may be any sensor capable of detecting whether an object is present, and is not limited to the magnetic sensor and the Doppler sensor.

The storage unit 12 is implemented by a storage device such as a memory, for example. In addition to data and various types of programs executed by the control unit 13, the storage unit 12 stores a detection result by the detection unit 11.

The control unit 13 is implemented by a processor such as a CPU. The control unit 13 comprehensively controls each functional unit in the sensor unit 10. The control unit 13 executes various types of processes by reading various types of programs stored in the storage unit 12 and executing the read programs. For example, the control unit 13 detects whether an object (vehicle) has been detected, and a traveling direction and speed of the object, based on the measurement result by the detection unit 11, and outputs a detection result. If an instruction from the outside or a predetermined condition is satisfied, the control unit 13 executes calibration, and resets and initializes each functional unit in the sensor unit 10. For example, the control unit 13 initializes internal parameters stored in the storage unit 12 of the sensor unit 10 and utilized for parking determination.

The communication unit 14 is a functional unit used for communicating with an external device (the information processing apparatus 20). For example, the communication unit 14 is implemented by a communication circuit, an antenna, and the like corresponding to a known radio communication method. In the communication network 30, the communication unit 14 communicates with a gateway (not illustrated) via a wireless personal area network (PAN) or an IPv6 over Low power Wireless Personal Area Network (6LoWPAN), for example. The communication units 14 in the plurality of sensor units 10 also communicate with each other via the wireless PAN. When a plurality of gateways are provided, the gateways communicate with each other via a wireless LAN or a wired LAN.

The communication unit 14 transmits data to the information processing apparatus 20 via the communication network 30 in accordance with control by the control unit 13, and receives control information and the like from the information processing apparatus 20 and provides the control information and the like to the control unit 13. For example, a detection result (including measurement data) from the control unit 13 may be transmitted to the information processing apparatus 20 in real time by the communication unit 14, may be stored in the storage unit 12, and transmitted to the information processing apparatus 20 by the communication unit 14 every time a predetermined period elapses, or may be transmitted to the information processing apparatus 20 in response to a request from the information processing apparatus 20.

Here, an installation location of the sensor units 10 in the arrangement area 400 will be described.

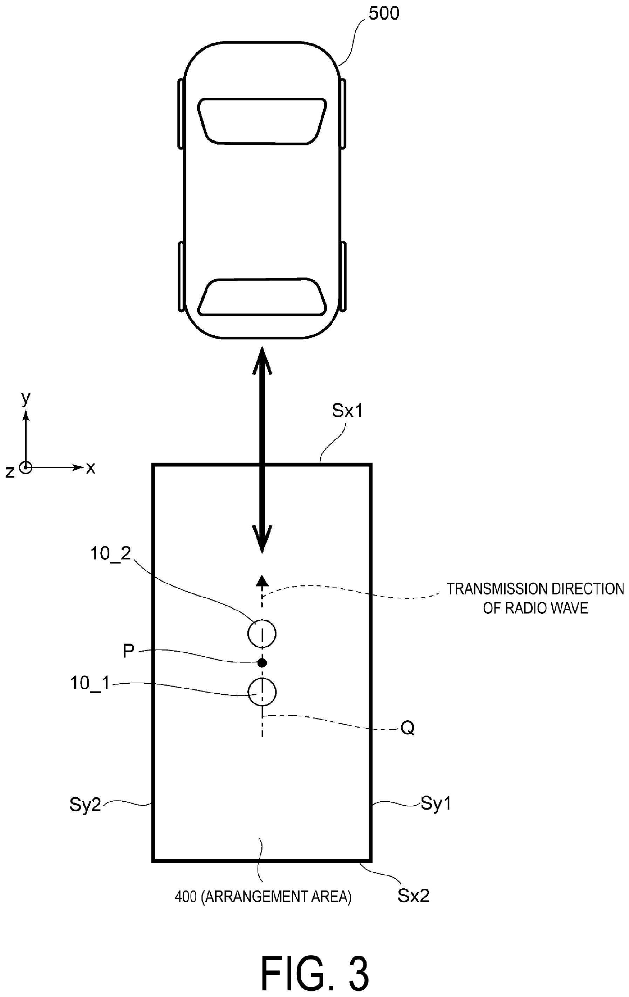

FIG. 3 is a diagram illustrating an arrangement example of the sensor units 10 in the arrangement area 400.

For example, in a parking lot, one arrangement area 400 is formed in a rectangular shape, preferably a rectangle in a plan view. For example, as illustrated in FIG. 3, the arrangement area 400 is formed so that, in an X-Y plane of a three dimensional space formed by the X-axis, the Y-axis, and the Z-axis, sides Sy1 and Sy2 in a long side direction of the arrangement area 400 are parallel to the Y-axis, and sides Sx1 and Sx2 in a short side direction of the arrangement area 400 are parallel to the X-axis. The arrangement area 400 is formed so that a vehicle enters the arrangement area 400 mainly by moving from the positive direction to the negative direction of the Y-axis, and the vehicle exits the arrangement area 400 mainly by moving from the negative direction to the positive direction of the Y-axis. That is, the arrangement area 400 is formed on the assumption that the vehicle enters or exits so as to cross the side Sx1 in the short side direction. Note that the shape of the arrangement area 400 is not limited to the above-described example, and can be appropriately changed in accordance with the area, the shape, and the like of the parking lot.

As illustrated in FIG. 3, the two sensor units 10_1 and 10_2 are installed in one arrangement area 400. The sensor units 10 are preferably arranged near a center P of the arrangement area 400.

As described above, the sensor units 10 include a Doppler sensor. Therefore, each sensor unit 10 is arranged so that the direction in which a radio wave of the Doppler sensor is transmitted coincides with an entering direction and an exiting direction (mainly the Y-axis direction) of the vehicle with respect to the arrangement area 400. For example, as illustrated in FIG. 3, in order to prevent interference between the radio waves of the two sensor units 10_1 and 10_2, the sensor units 10_1 and 10_2 are arranged side by side in the long side direction (the Y-axis direction) of the arrangement area 400 and spaced apart from each other.

The two sensor units 10_1 and 10_2 are provided at positions close to the center P of the arrangement area 400. For example, the sensor units 10_1 and 10_2 are arranged on a straight line Q passing through the center P of the arrangement area 400 and substantially parallel to the sides Sy1 and Sy2, and are spaced apart from each other with the center P interposed between the sensor units 10_1 and 10_2. In this case, the sensor unit 10_1 and the sensor unit 10_2 are preferably arranged as close to the center P as possible within a range in which radio waves of the sensor units 10_1 and 10_2 do not interfere with each other. That is, the sensor units 10_1 and 10_2 are preferably arranged at positions at which the distances between the sensor units 10 and the center P of the arrangement area 400 are shorter than the distances between the sensor units 10 and the sides Sy1 and Sy2 and the sides Sx1 and Sx2 of the arrangement area 400, and at which an influence from the radio wave interference between the sensor units 10_1 and 10_2 can be ignored.

The information processing apparatus 20 comprehensively controls the object detection system 1 and determines whether an object is present in a predetermined area, based on detection results of the sensor units 10. The information processing apparatus 20 is a program processing apparatus that reads various types of programs stored in a storage device 102 and executes the read programs, to execute various types of processes. Examples of the information processing apparatus 20 include a server, a personal computer, a tablet terminal, and a smartphone.

The information processing apparatus 20 communicates with the external device 50 via the communication line 40 to transmit and receive data to and from the external device 50. For example, the information processing apparatus 20 communicates with each sensor unit 10 via the communication line 40 to control an operation of each sensor unit 10 and receive various types of data indicating a detection result (measurement data), an operation state, and the like of each sensor unit 10. Here, the communication line 40 is, for example, a wide area communication line such as the Internet. Note that the communication line 40 may be a dedicated line in which a communication path between the information processing apparatus 20 and the external device 50 is fixed.

For example, the external device 50 includes an information processing terminal 51 including a display device 511 such as a personal computer, a tablet terminal, and a smartphone, which is used by a user such as a manager of the object detection system 1 serving as a parking detection system or a user of a parking lot.

The information processing apparatus 20 and the information processing terminal 51 transmit and receive data to and from each other via the communication line 40 by a known communication method. For example, the information processing apparatus 20 transmits information indicating a state (parked, empty, abnormal state, and the like) of the designated arrangement area 400, to the information processing terminal 51. The information may be transmitted and received in response to a request from the information processing terminal 51 to the information processing apparatus 20, or may be transmitted and received when the information processing apparatus 20 detects that the sensor unit 10 or the like satisfies a predetermined condition, or may be transmitted and received periodically.

The external device 50 may include an illumination device 52 that emits light in response to a signal input from the outside. The information processing apparatus 20 and the illumination device 52 are connected to each other via the communication line 40, and can transmit and receive data and signals to and from each other by a known communication method, for example. As will be described later, the information processing apparatus 20 transmits control information and the like to the illumination device 52 via the communication line 40, to control light emission of the illumination device 52.

For example, the illumination device 52 is provided corresponding to each of the arrangement areas 400_1 to 400_m (predetermined areas). For example, as illustrated in FIG. 1, the illumination device 52 includes a light-emitting unit 521 and a drive control circuit 522. The light-emitting unit 521 includes a light-emitting element such as a light-emitting diode (LED) that generates light. The drive control circuit 522 is a circuit that drives the light-emitting unit 521 to control illumination and extinction of the light-emitting unit 521. The drive control circuit 522 may be realized by including, in addition to a drive element such as a transistor that drives the LED, a program processing apparatus such as a microcontroller and an FPGA that controls the drive element, based on control information received from the information processing apparatus 20, for example.

The illumination device 52 is preferably arranged at a location that the manager or the like of the object detection system 1 serving as the parking detection system can visually recognize. For example, when the manager is normally present in a location different from the parking lot, the illumination device 52 is preferably arranged at the location where the manager is normally present. If the manager monitors the situation of the parking lot while viewing an image of an imaging device (for example, a monitoring camera) installed in the parking lot, the illumination device 52 may be arranged in an area that can be imaged by the imaging device installed in the parking lot.

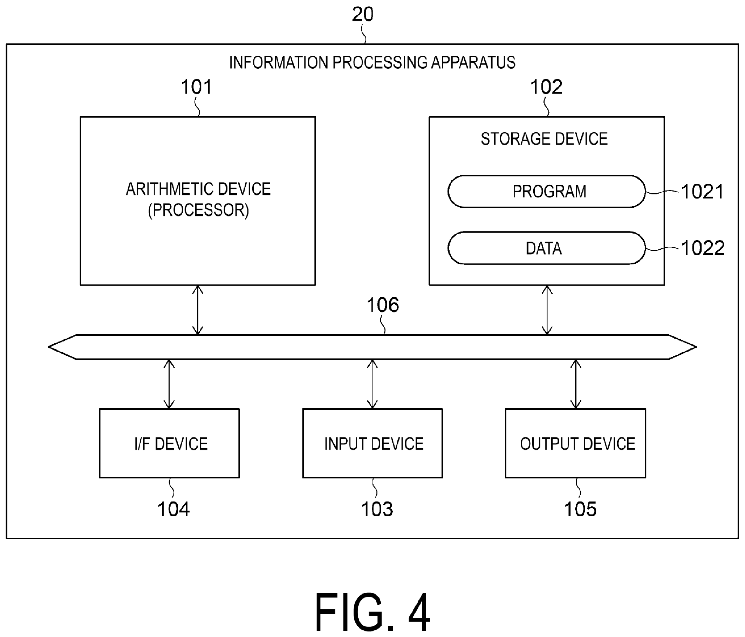

FIG. 4 is a diagram illustrating an example of a hardware configuration of the information processing apparatus 20.

As illustrated in FIG. 4, the information processing apparatus 20 includes, for example, an arithmetic device 101, the storage device 102, an input device 103, an interface (I/F) device 104, an output device 105, and a bus 106 as hardware resources.

The arithmetic device 101 is constituted by a processor such as a central processing unit (CPU) and a digital signal processor (DSP). The storage device 102 includes a storage region for storing a program 1021 that causes the arithmetic device 101 to execute various types of data processing and data 1022 utilized in the data processing by the arithmetic device 101, and is constituted by, for example, a read only memory (ROM), a random access memory (RAM), an HDD, a flash memory, or the like.

The program 1021 stored in the storage device 102 includes a program that functions as a device that comprehensively controls the object detection system 1 and determines whether a vehicle is parked in each arrangement area 400, and is installed in the storage device 102 in advance, for example.

The data 1022 stored in the storage device 102 includes, for example, various types of parameters utilized in data processing by the arithmetic device 101, a calculation result by the arithmetic device 101, and the like.

Note that the program 1021 and the data 1022 may be circulated via a network, or may be written in a computer-readable storage medium (non-transitory computer-readable medium) such as a CD-ROM or a memory card to be circulated.

The input device 103 is a device that detects information input from the outside, and examples of the input device 103 include a keyboard, a mouse, a pointing device, a button, and a touch panel. The I/F device 104 is a device that transmits and receives data to and from the outside, and is constituted by a communication control circuit, an input/output port, an antenna, and the like used for performing communication by a wire or by radio, for example.

The output device 105 is a device that outputs information and the like obtained by data processing by the arithmetic device 101. Examples of the output device 105 include an external storage device such as an SSD and an HDD, a display device such as a liquid crystal display (LCD) and an organic electro luminescence (EL) display, and a known communication device that transmits and receives data to and from an external device. The bus 106 connects the arithmetic device 101, the storage device 102, the input device 103, the I/F device 104, and the output device 105 with each other, so that data can be transmitted and received between these devices.

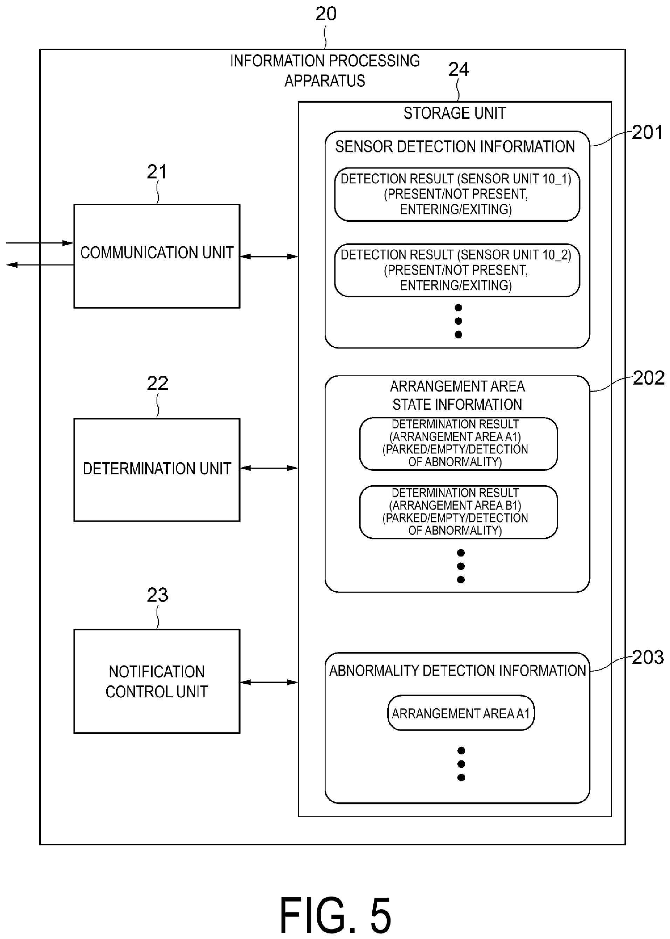

FIG. 5 is a diagram illustrating a functional block configuration of the information processing apparatus 20.

The information processing apparatus 20 includes a function of comprehensively controlling the object detection system 1, a function of determining whether an object is present in a predetermined area, based on a detection result of the sensor unit 10, and a function of announcing to the outside when the sensor unit 10 is in an abnormal state.

Specifically, as illustrated in FIG. 5, the information processing apparatus 20 includes a communication unit 21, a determination unit 22, a notification control unit 23, and a storage unit 24, as functional blocks for realizing the above-described functions. These functional blocks are realized when hardware resources constituting the information processing apparatus illustrated in FIG. 4 work together with software (the program 1021) installed in the information processing apparatus 20. That is, in the information processing apparatus 20, the arithmetic device 101 executes an arithmetic operation in accordance with the program 1021 stored in the storage device 102, to control the storage device 102, the input device 103, the I/F device 104, the output device 105, and the bus 106, and thus, the functional blocks (the communication unit 21, the determination unit 22, the notification control unit 23, and the storage unit 24) of the information processing apparatus 20 illustrated in FIG. 5 are realized.

The communication unit 21 is a functional unit that communicates with an external device to transmit and receive data. The communication unit 21 acquires a detection result of each sensor unit 10 via the communication line 40 and stores the detection result in the storage unit 24 as sensor detection information 201. The communication unit 21 reads arrangement area state information 202 and abnormality detection information 203, which will be described later, from the storage unit 24 via the communication line 40, and transmits the arrangement area state information 202 and the abnormality detection information 203 to the external device 50.

The storage unit 24 is a functional unit that stores various types of data such as data of the comprehensive control by the information processing apparatus 20 and a determination result of a parking situation of the vehicle in the arrangement area 400. For example, the storage unit 24 stores the sensor detection information 201 including a detection result of each sensor unit 10, the arrangement area state information 202 including a determination result of the parking situation of the vehicle in each arrangement area 400 of a management target, and the abnormality detection information 203 indicating that an abnormality has occurred in the predetermined area (the arrangement area 400).

The determination unit 22 is a functional unit that determines whether an object is present in a predetermined area. That is, the determination unit 22 determines whether a vehicle 500 is parked in the arrangement area 400. Specifically, the determination unit 22 determines whether the detection results (detected/not detected) of the plurality of sensor units 10 arranged in the predetermined area that is the determination target coincide with each other.

When the detection results of the plurality of sensor units 10 coincide with each other, the determination unit 22 determines whether an object is present in the predetermined area, based on the detection results. For example, when the detection results of the active sensor units 10_1 and 10_2 arranged in the arrangement area 400 that is the determination target coincide with each other, the determination unit 22 determines whether an object is present in the arrangement area 400, based on the detection results that coincide with each other.

On the other hand, when the detection results of the plurality of sensor units 10 do not coincide with each other, the determination unit 22 determines that an abnormality has occurred in the sensor unit 10 in the predetermined area. For example, when the detection results of the active sensor units 10_1 and 10_2 arranged in the arrangement area 400 that is the determination target do not coincide with each other, the determination unit 22 determines that an abnormality has occurred in any one of the sensor units 10_1 and 10_2 arranged in the arrangement area 400 that is the determination target.

Here, among the sensor units 10_1 to 10_n installed in the predetermined area (the arrangement area 400), the active sensor units 10 refer to the sensor units 10 excluding the sensor unit 10 that is not operating due to certain circumstances. For example, when three sensor units 10 are installed in the predetermined area and one sensor unit 10 among the three sensor units 10 is not operating during maintenance, the remaining two sensor units 10 serve as active sensor units 10.

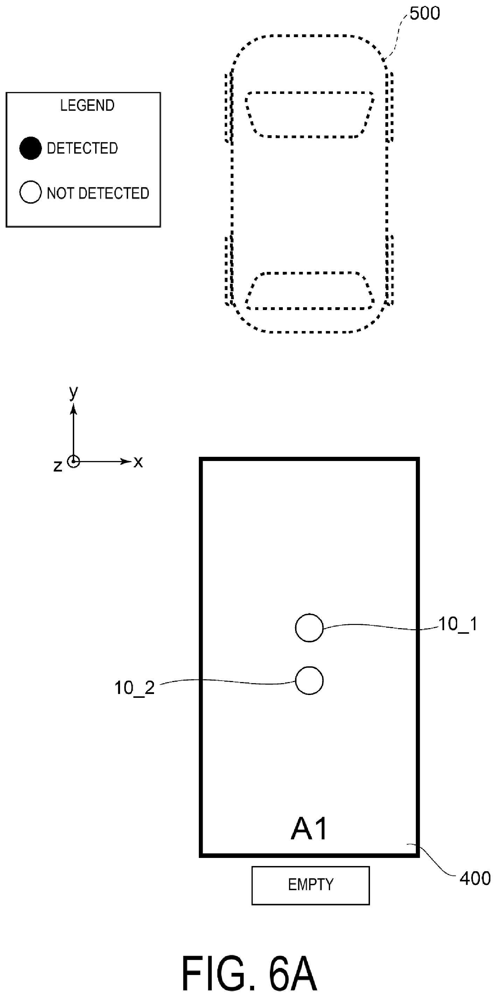

FIGS. 6A to 6D are diagrams for describing the parking determination method and the abnormality detection method by the determination unit 22.

FIG. 6A illustrates a state of the vehicle 500 being not stopped in the one arrangement area 400. In this state, as illustrated in FIG. 6A, when the two sensor units 10_1 and 10_2 installed in the arrangement area 400 each output a detection result indicating that no object is detected, the determination unit 22 determines that the state of the arrangement area 400 is "empty", based on the detection results (not detected) of the sensor units 10_1 and 10_2 that coincide with each other.

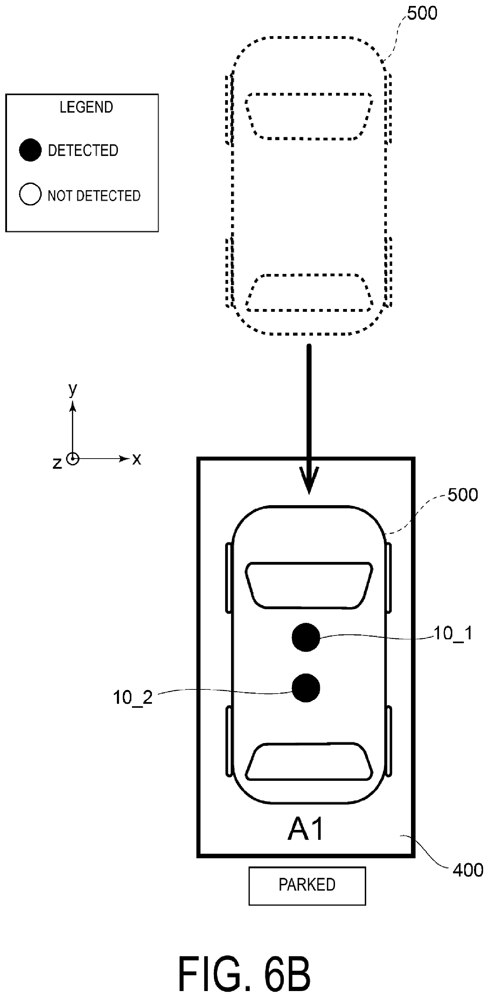

FIG. 6B illustrates a state in which the vehicle 500 enters the one arrangement area 400 and is stopped. In this state, as illustrated in FIG. 6B, when the two sensor units 10_1 and 10_2 installed in the arrangement area 400 each output a detection result indicating that an object is detected, the determination unit 22 determines that the state of the arrangement area 400 is "parked", based on the detection results (detected) of the sensor units 10_1 and 10_2 that coincide with each other.

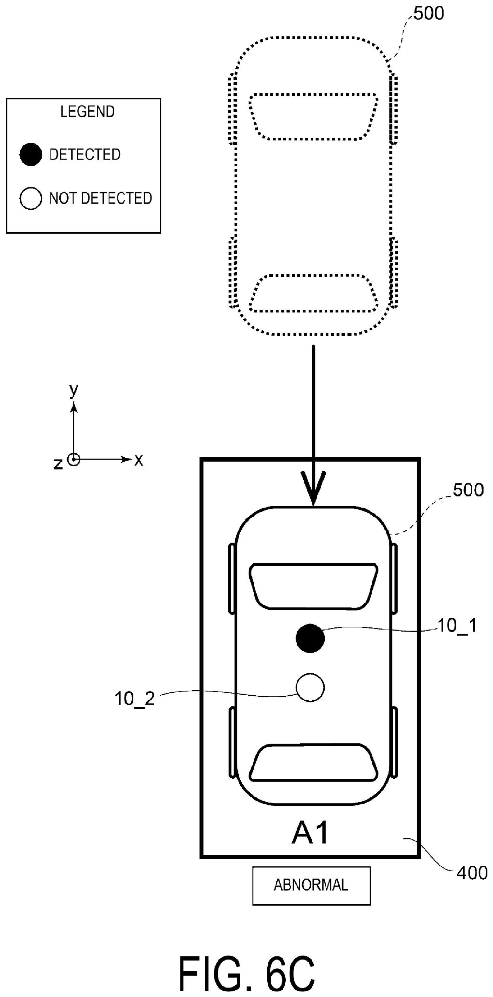

FIG. 6C illustrates a state in which the vehicle 500 enters the one arrangement area 400 and is stopped. In this state, as illustrated in FIG. 6C, among the two sensor units 10_1 and 10_2 installed in the arrangement area 400, the sensor unit 10_1 outputs a detection result indicating that an object is detected, while the sensor unit 10_2 outputs a detection result indicating that no object is detected. In this case, the determination unit 22 determines that an abnormality has occurred in any one of the sensor units 10_1 and 10_2 arranged in the arrangement area 400 that is the determination target.

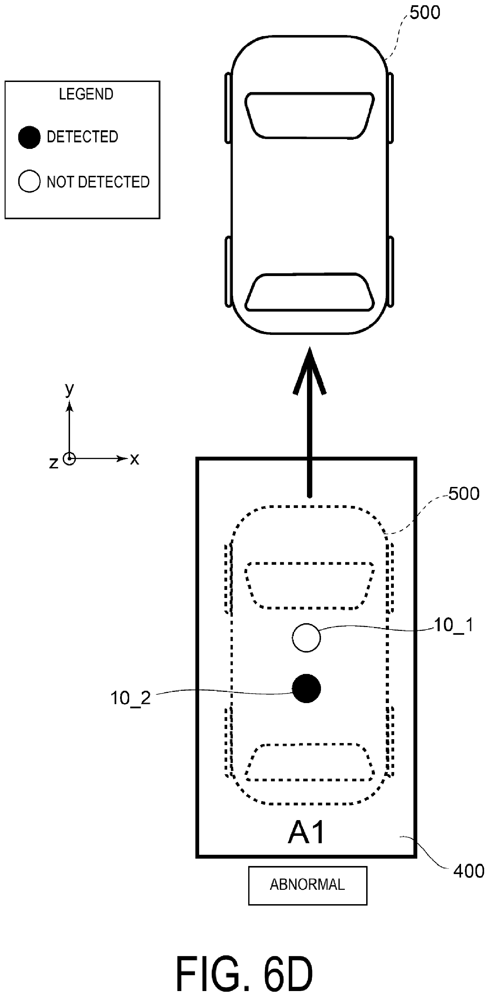

FIG. 6D illustrates a state in which the vehicle 500 leaves the one arrangement area 400. In this state, as illustrated in FIG. 6D, among the two sensor units 10_1 and 10_2 installed in the arrangement area 400, the sensor unit 10_1 outputs a detection result indicating that no object is detected, while the sensor unit 10_2 outputs a detection result indicating that the object is detected. In this case, the determination unit 22 determines that an abnormality has occurred in any one of the sensor units 10_1 and 10_2 arranged in the arrangement area 400 that is the determination target.

The determination unit 22 stores a determination result of each of the arrangement areas 400_1 to 400_m (predetermined areas) in the storage unit 24 as the arrangement area state information 202.

The notification control unit 23 is a functional unit that controls a notification by the external device 50 when an abnormality of the sensor unit 10 is detected. When the determination unit 22 determines that an abnormality has occurred in the sensor unit 10 in the predetermined area, the notification control unit 23 generates the abnormality detection information 203 indicating that an abnormality has occurred in the predetermined area, stores the abnormality detection information 203 in the storage unit 24, and transmits the abnormality detection information 203 to the external device 50 via the communication unit 21.

When the external device 50 receives the abnormality detection information 203, the external device 50 informs that an abnormality has occurred in the predetermined area, in a human-perceivable manner.

For example, the abnormality detection information 203 includes information indicating that an abnormality has occurred, identification information of the arrangement area 400 in which the abnormality has occurred, and control information relating to the external device 50.

Here, in a case in which the external device 50 is the information processing terminal 51, the control information included in the abnormality detection information 203 includes, for example, information instructing the information processing terminal 51 to display, on a screen of the display device 511 of the information processing terminal 51, information indicating that an abnormality has occurred and information indicating the arrangement area 400 in which the abnormality has occurred.

The information processing terminal 51 displays information indicating that an abnormality has occurred and information indicating the arrangement area 400 in which the abnormality has occurred, on the screen of the display device 511 of the information processing terminal 51, in accordance with the control information included in the abnormality detection information 203.

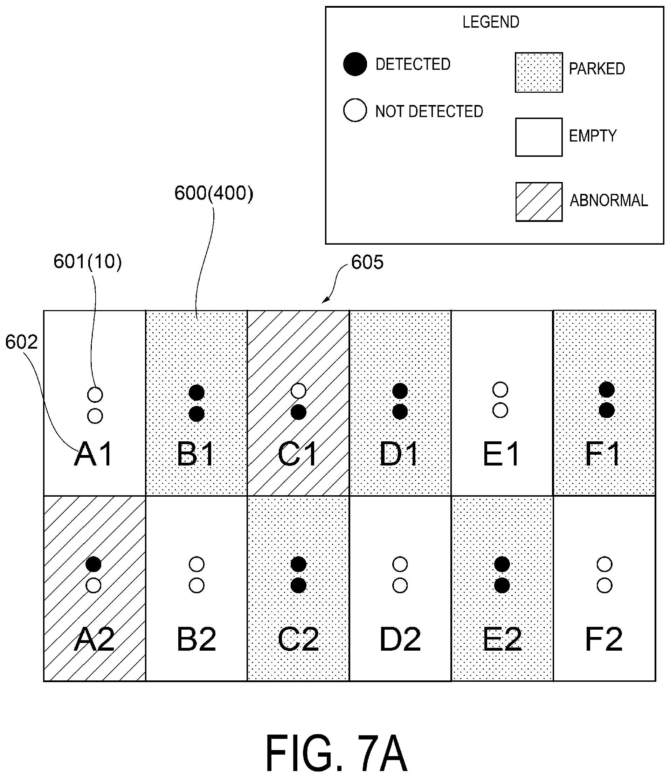

FIG. 7A is a diagram illustrating a display example when information relating to a state of each arrangement area 400 and a state of each sensor unit 10 in a parking lot to be monitored is displayed on the screen of the information processing terminal 51.

For example, as illustrated in FIG. 7A, an icon 600 generally representing a parking slot (the arrangement area 400) in a parking lot serving as a management target is displayed on the screen of the display device 511 of the information processing terminal 51 used by a manager of the parking lot, and an icon 601 generally representing the sensor units 10_1 to 10_n and identification information 602 of the parking slot are displayed in the icon 600.

The icon 600 representing the parking slot is displayed in different colors, patterns, and the like, in accordance with the state of the corresponding arrangement area 400 (for example, parked, empty, and abnormal), as illustrated in the legend in FIG. 7A, for example.

The icon 601 representing the sensor unit 10 is displayed in different colors, patterns, and the like, in accordance with a state (for example, detected, and not detected) of the corresponding sensor unit 10, as illustrated in the legend in FIG. 7A, for example.

For example, as indicated by reference sign 605 in FIG. 7A, when the abnormality detection information 203 indicating that an abnormality has occurred in a parking slot C1 is transmitted from the information processing apparatus 20 to the information processing terminal 51, the information processing terminal 51 changes the display mode of the icon 600 representing the parking slot C1 from a display mode of a normal state (empty or parked) to a display mode representing an abnormal state (switching of the color or pattern, blinking, or the like). Thus, the manager or the like of the parking lot who operates the information processing terminal 51 can recognize that an abnormality has occurred in the parking slot C1.

On the other hand, when the external device 50 is the illumination device 52, the notification control unit 23 in the information processing apparatus 20 transmits the abnormality detection information 203 to the illumination device 52 corresponding to the arrangement area 400 in which the abnormality has occurred. For example, the control information included in the abnormality detection information 203 includes information for identifying the illumination device 52 to be controlled and information for instructing the illumination device 52 to illuminate (or to blink).

The illumination device 52 emits light in accordance with the control information included in the abnormality detection information 203. Specifically, when the drive control circuit 522 receives the abnormality detection information 203, the drive control circuit 522 drives the light-emitting unit 521 to cause the light-emitting unit 521 to emit light.

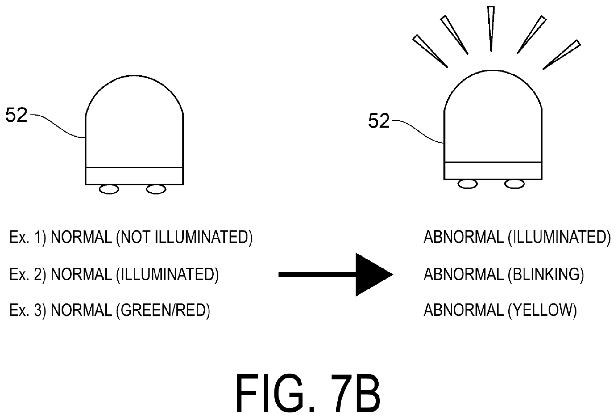

FIG. 7B is a diagram illustrating an illumination example of the illumination device 52.

For example, as illustrated in FIG. 7B, when the target parking slot is in a normal state, that is, when the sensor units 10_1 and 10_2 installed in the parking slot output detection results (detected or not detected) that coincide with each other, the drive control circuit 522 in the illumination device 52 controls the light-emitting unit 521 to cause the light-emitting unit 521 to extinguish the light. On the other hand, when the target parking slot is in an abnormal state, that is, when the sensor units 10_1 and 10_2 installed in the parking slot output detection results different from each other, the drive control circuit 522 in the illumination device 52 controls the light-emitting unit 521 to cause the light-emitting unit 521 to illuminate.

For example, the light-emitting unit 521 may illuminate when the parking slot is in a normal state, and the light-emitting unit 521 may blink when the parking slot is in an abnormal state.

In a case in which the light-emitting unit 521 has a function of switching between a plurality of light emission colors, for example, the drive control circuit 522 may cause the light-emitting unit 521 to illuminate in a predetermined color (for example, green) when the parking slot is in the "empty" state, the drive control circuit 522 may cause the light-emitting unit 521 to illuminate in a predetermined color (for example, red) when the parking slot is in the "parked" state, and the drive control circuit 522 may cause the light-emitting unit 521 to illuminate in another predetermined color (for example, yellow) or to blink when the parking slot is in the "abnormal" state.

That is, when receiving the abnormality detection information 203, the drive control circuit 522 may cause the light-emitting unit 521 to emit light in a mode different from the mode of the light-emitting unit 521 when the arrangement area 400 is in the normal state.

Next, a process flow according to the parking determination method and the abnormality detection method by the information processing apparatus 20 will be described.

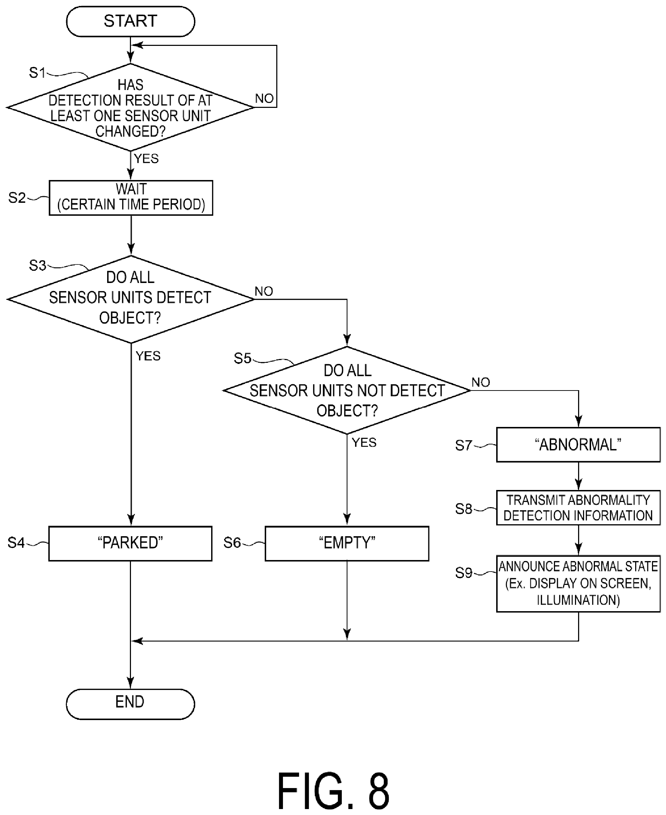

FIG. 8 is a flowchart illustrating a process flow according to the parking determination method and the abnormality detection method by the information processing apparatus 20.

Here, a process flow according to the parking determination method and the abnormality detection method by the information processing apparatus 20 will be described by using a case in which the two sensor units 10_1 and 10_2 are arranged in the arrangement area 400_1 of a parking lot as an example (see FIG. 2).

First, the information processing apparatus 20 determines whether the detection result of the sensor unit 10 provided in the arrangement area 400_1 has changed (step S1). Specifically, the determination unit 22 determines whether the detection result of at least one sensor unit 10 among the two sensor units 10_1 and 10_2 has changed (step S1). If there is no change (step S1: NO), the information processing apparatus 20 continues to monitor the state of each sensor unit 10.

On the other hand, if the detection result of at least one sensor unit 10 has changed (step S1: YES), the information processing apparatus 20 waits during a certain time period (step S2). For example, after detecting that the detection result of at least one sensor unit 10 has changed, the determination unit 22 waits during a time period set in advance.

After the certain time period has elapsed, the information processing apparatus 20 determines whether all the sensor units 10 in the arrangement area 400_1 detect the object (step S3). Specifically, the determination unit 22 determines whether the detection results of the two sensor units 10_1 and 10_2 in the arrangement area 400_1 both indicate "detected". When the detection results of both sensor units 10_1 and 10_2 are "detected" (step S3: YES), the information processing apparatus 20 determines that the state of the arrangement area 400_1 is "parked" (step S4). Specifically, the determination unit 22 sets the determination result of the arrangement area 400_1 in the arrangement area state information 202 stored in the storage unit 24 to "parked", and updates the arrangement area state information 202.

In step S3, when not all the detection results of the sensor units 10 are "detected" (step S3: NO), the information processing apparatus 20 determines whether all the sensor units 10 do not detect an object (step S5). Specifically, the determination unit 22 determines whether the detection results of the two sensor units 10_1 and 10_2 in the arrangement area 400_1 both indicate "not detected". When the detection results of the sensor units 10_1 and 10_2 are both "not detected" (step S5: YES), the information processing apparatus 20 sets the state of the arrangement area 400_1 to "empty" (step S6). Specifically, the determination unit 22 sets the determination result of the arrangement area 400_1 in the arrangement area state information 202 stored in the storage unit 24 to "empty", and updates the arrangement area state information 202.

On the other hand, when not all the detection results of the sensor units 10 are "not detected" (step S5: NO), that is, when the detection results of the sensor units 10_1 and 10_2 are different from each other, the information processing apparatus 20 determines that an abnormality has occurred in the sensor unit 10 in the arrangement area 400_1 (step S7). Specifically, the determination unit 22 sets the determination result of the arrangement area 400_1 in the arrangement area state information 202 stored in the storage unit 24 to "abnormal", and updates the arrangement area state information 202.

Next, the notification control unit 23 generates the abnormality detection information 203 by the above-described procedure, stores the abnormality detection information 203 in the storage unit 24, and transmits the abnormality detection information 203 to the external device 50 via the communication unit 21 (step S8). The external device 50 that receives the abnormality detection information 203 informs that an abnormality has occurred in the arrangement area 400_1 (step S9). For example, the information processing terminal 51 uses the above-described procedure to display on the screen information indicating that an abnormality has occurred in the arrangement area 400_1. Alternatively, the illumination device 52 uses the above-described procedure to cause the light-emitting unit 521 to illuminate or blink. Note that the information processing terminal 51 may display on the screen information indicating that an abnormality has occurred, and the illumination device 52 may cause the light-emitting unit 521 to illuminate or blink. The information processing apparatus 20 uses the above-described procedure to execute a process according to the parking determination and the abnormality detection.

As described above, the object detection system 1 according to the embodiment includes a plurality of sensor units 10 that are provided corresponding to a predetermined area (the arrangement area 400), detect an object (for example, the vehicle 500) in the predetermined area, and output a detection result, and the information processing apparatus 20 that determines whether an object is present in the predetermined area, based on the detection results of the sensor units 10. If the detection results of the plurality of sensor units 10 coincide with each other, the information processing apparatus 20 determines whether an object is present in the predetermined area, based on the detection results. If the detection results of the plurality of sensor units 10 do not coincide with each other, the information processing apparatus 20 determines that an abnormality has occurred in the sensor unit in the predetermined area.

The plurality of the sensor units 10 are installed in the same arrangement area 400. Therefore, when the sensor units 10 do not output the same detection result, it can be estimated that an erroneous detection occurs in at least one of the sensor units 10 in the arrangement area 400. Thus, according to the object detection system 1, it is possible to detect whether an erroneous detection by the sensor unit 10 occurs.

In the object detection system 1 according to the embodiment, when the information processing apparatus 20 determines that an abnormality has occurred in the sensor unit 10 in the predetermined area, the information processing apparatus 20 generates the abnormality detection information 203 indicating that an abnormality has occurred in the predetermined area and transmits the abnormality detection information 203 to the external device 50. When the external device 50 receives the abnormality detection information 203, the external device 50 informs that an abnormality has occurred in the predetermined area, in a human-perceivable manner.

Accordingly, for example, a manager or the like of a parking lot to which the object detection system 1 is applied can recognize that an abnormality has occurred in the sensor unit 10 in the parking lot, and it is easy to consider future measures and the like.

In the object detection system 1, the external device 50 includes the information processing terminal 51 including the display device 511. When receiving the abnormality detection information 203, the information processing terminal 51 causes the display device 511 to display information indicating that an abnormality has occurred in a predetermined area.

Therefore, for example, it is possible to cause a manager or the like who uses the information processing terminal 51 to monitor a parking lot to easily and reliably recognize that an abnormality has occurred in the sensor unit 10.

In the object detection system 1, the external device 50 includes the illumination device 52 including the light-emitting unit 521 and the drive control circuit 522 that controls the drive of the light-emitting unit 521. When receiving the abnormality detection information 203, the drive control circuit 522 causes the light-emitting unit 521 to emit light.

Therefore, for example, by installing the illumination device 52 at a location that can be visually recognized by a manager or the like who monitors the parking lot, it is possible to cause the manager or the like to easily and reliably recognize that an abnormality has occurred in the sensor unit 10.

In the object detection system 1, the illumination device 52 is provided corresponding to each predetermined area. Thus, the manager or the like can more easily recognize the arrangement area 400 in which the abnormality has occurred.

### Expansion of Embodiments

The invention made by the present inventor has been specifically described above based on the embodiments, but the present invention is not limited to the embodiments, and it goes without saying that the present invention can be changed in various ways within the scope not departing from the gist of the present invention.

For example, in the above-described embodiment, the configuration and the operation of the object detection system 1 have been described by using, as an example, a case in which an object serving as a detection target of the object detection system 1 is a vehicle. However, the embodiment is not limited to this case. The detection target of the object detection system 1 may be an object other than a vehicle, for example, a product in a manufacturing line, or a living being such as a person and an animal.

In the above-described embodiment, when the determination unit 22 detects an abnormality of the sensor unit 10 in the arrangement area 400, the notification control unit 23 may instruct the sensor unit 10 in the arrangement area 400 to execute calibration. For example, the notification control unit 23 may transmit, via the communication unit 21, control information for instructing each sensor unit 10 in the arrangement area 400 to execute calibration. Thus, it is more likely that the sensor unit 10 in which erroneous detection has occurred can be reset and the sensor unit 10 can quickly be restored to a normal state.

The external device 50 may include a control device that controls the illumination devices 52. For example, when receiving the abnormality detection information 203 transmitted from the information processing apparatus 20, the control device may analyze the identification information of the arrangement area 400 included in the abnormality detection information 203, and may cause the illumination devices 52 in the arrangement area 400 corresponding to the analyzed identification information to individually illuminate or blink.

When the determination unit 22 detects an abnormality of the sensor unit 10 in the arrangement area 400, the notification control unit 23 of the information processing apparatus 20 may transmit an e-mail including information indicating that the abnormality is detected, to a predetermined mail address.

The external device 50 may include a sound generation device that generates sound. Similarly to the illumination device 52, the sound generation device is installed at a location where the manager or the like can recognize the sound. When receiving the abnormality detection information 203, the sound generation device may announce, by audio, information of the arrangement area 400 in which the abnormality of the sensor unit 10 is detected and the occurrence of the abnormality by sound.

The information processing apparatus 20 is not limited to a case in which the information processing apparatus 20 is realized by one program processing apparatus (computer) as described above. The information processing apparatus 20 may be realized by a plurality of program processing apparatuses connected to each other via a known communication network or the like. A hardware configuration of the information processing apparatus 20 is not particularly limited.

The flowchart described above is an example and is not limited to this example. For example, another process may be inserted between steps and processes may be executed in parallel.

### Reference Signs List

1 Object detection system, 10, 10_1 to 10_n Sensor unit, 11 Detection unit, 12 Storage unit, 13 Control unit, 14 Communication unit, 21 Communication unit, 22 Determination unit, 23 Notification control unit, 24 Storage unit, 50 External device, 51 Information processing terminal, 52 Illumination device, 521 Light-emitting unit, 522 Drive control circuit, 201 Sensor detection information, 202 Arrangement area state information, 203 Abnormality detection information, 400, 400_1 to 400_m Predetermined area (arrangement area), 500 Object (vehicle), Sy1, Sy2 Side of arrangement area 400 in Y-axis direction, Sx1, Sx2 Side of arrangement area 400 in X-axis direction, 20 Information processing apparatus, 30 Communication network, 40 Communication line, P Center of arrangement area.

## Claims

1. An object detection system, comprising:
a plurality of sensor units provided corresponding to a predetermined area, and configured to detect an object in the predetermined area and output detection results; and
an information processing apparatus configured to determine whether the object is present in the predetermined area, based on the detection results, wherein
the information processing apparatus includes:
a communication unit configured to communicate with an external device and acquire the detection result of each of the plurality of sensor units;
a determination unit configured to determine, when the detection results of the plurality of sensor units coincide with each other, whether the object is present in the predetermined area, based on the detection results, and determine, when the detection results of the plurality of sensor units do not coincide with each other, that an abnormality has occurred in at least one of the sensor units in the predetermined area; and
a storage unit configured to store a determination result from the determination unit.

2. The object detection system according to claim 1, further comprising:
an external device connected to the information processing apparatus via a communication line, wherein
the information processing apparatus further includes a notification control unit configured to generate abnormality detection information indicating that an abnormality has occurred in the predetermined area and transmit the abnormality detection information to the external device via the communication unit, when the determination unit determines that an abnormality has occurred in at least one of the sensor units in the predetermined area, and
the external device is configured to notify, when receiving the abnormality detection information, that an abnormality has occurred in the predetermined area in a human-perceivable manner.

3. The object detection system according to claim 2, wherein
the external device includes an information processing terminal including a display device, and
the information processing terminal is configured to cause the display device to display information indicating that an abnormality has occurred in the predetermined area, when receiving the abnormality detection information.

4. The object detection system according to claim 2, wherein
the external device includes an illumination device including a light-emitting unit and a drive control circuit configured to control drive of the light-emitting unit, and
the drive control circuit is configured to cause the light-emitting unit to emit light, when receiving the abnormality detection information.

5. The object detection system according to claim 4, wherein
the illumination device is provided corresponding to each predetermined area being the predetermined area.

6. An object detection method for determining whether an object is present in a predetermined area, based on detection results of a plurality of sensor units provided corresponding to the predetermined area and configured to detect the object in the predetermined area, the method comprising:
a first step of acquiring, by an information processing apparatus, the detection results of the plurality of sensor units;
a second step of determining, by the information processing apparatus, whether the detection results of the plurality of sensor units coincide with each other;
a third step of determining, by the information processing apparatus, whether the object is present in the predetermined area, based on the detection results, when the detection results of the plurality of sensor units coincide with each other; and
a fourth step of determining, by the information processing apparatus, that an abnormality has occurred in at least one of the sensor units in the predetermined area, when the detection results of the plurality of sensor units do not coincide with each other.
